# EUROPEAN PATENT APPLICATION

(11) **EP 3 206 423 A1**
(43) Date of publication of application: **16.08.2017**
(21) Application number: 16305171.7
(22) Date of filing: 15.02.2016
(51) Int. Cl.: H04W 12/08, H04W 12/06, H04W 4/00, H04W 84/12, H04W 92/10, H04L 29/06, H04W 76/00

(54) **DEVICE AND METHOD FOR CONNECTING DEVICES TO A NETWORK**

(71) Applicant: Thomson Licensing, 92130 Issy-les-Moulineaux (FR)
(72) Inventor: LE SCOUARNEC, Nicolas, 35576 CESSON-SÉVIGNÉ (FR); NEUMANN, Christoph, 35576 CESSON-SÉVIGNÉ (FR); ONNO, Stéphane, 35576 CESSON-SÉVIGNÉ (FR)
(74) Representative: Ståhl, Björn Niclas

(57) **Abstract**

A wireless device (120) finds (S210) available access points (130) having local networks (140), selects (S220) a network to connect to. The access point (130) of the selected network authenticates (S230) the wireless device (120) based on authentication information received from the wireless device (120), the authentication information being different from a shared network secret required to access the local network (140). The wireless device (120) can then be given access to an isolated network through which it can have access to an external network (150) such as the Internet where it can contact a server to obtain information about a user network to connect to. The access point (130) can also authorize (S240) the wireless device (120) in order to provide access to the local network (140). The authentication information can be a certificate which will enable the wireless device (120) of a user access to at least one site on the Internet even via an access point that does not belong to the user. The wireless device can be an Internet of Things (IoT) device.

## Description

### TECHNICAL FIELD

The present disclosure relates generally to networks configuration and in particular to installation of devices without a user interface in such networks.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

The so-called Internet of Things (loT) can be said to be a network of devices configured to collect and exchange data. The devices can for example be biochip transponders, sensors in thermostat systems and domestic appliances such as washing machines.

It has been estimated that the loT by 2020 will comprise almost 50 billion devices. As many of these devices lack a user interface, installing them in a network can be a problem.

Naturally, there are several conventional solutions for loT device installation.

A first solution is to use a smartphone that connects to the loT device using Bluetooth or an open WiFi network and acts as a configuration interface for the loT device. The WiFi password is provided to the loT device either by having the user type the password or by the smartphone reading the password from a key store or the like and passing it to the loT device. A drawback of this solution is that it requires user intervention as it is necessary to connect to the loT device and, possibly, to provide the WiFi password; this may be too complicated, in particular for average users. A further drawback is that it requires the user to have a smartphone that is compatible and that can install the interface application. This can cause future maintenance problems as the application has to remain available so that the device can be re-configured. Yet another drawback is that the smartphone may reconnect to a regular WiFi network automatically before the configuration is complete if, for example, the regular WiFi network provides a stronger signal or because the loT network does not offer Internet access.

A second solution is Wi-Fi Protected Setup (WPS) that provides four different modes for adding a new device. In one of these modes, Push Button Configuration (PBC), when a button is pressed on the inserting device and on the device to be inserted, the former transfers the password to the latter. This requires physical access to the inserting device, which can be a problem. There is also a need for a button on the loT device, which may not be desirable. Furthermore, since WPS has been the source of security problems in the past, it is now disabled by default in some gateways.

It will be appreciated that it is desired to have a solution that overcomes at least part of the conventional problems related to device insertion, in particular of devices without a user interface.

### SUMMARY OF DISCLOSURE

In a first aspect, the present principles are directed to an access point comprising an interface configured for wireless communication with devices and a hardware processor configured to provide access to a local network to devices proving knowledge of a shared network secret, authenticate a device using authentication information different from the shared network secret received from the device, and provide an authenticated device with access to a network isolated from the local network.

Various embodiments of the first aspect include:
- That the hardware processor is configured to provide limited Internet access to the authenticated device through the network for the authenticated device.
- That the hardware processor is configured to perform authorization of the authenticated device in order to provide access to the local network.

In a second aspect, the present principles are directed to a device for connecting to a local network. The device comprises memory configured to store authentication information, an interface configured for wireless communication with access points and a hardware processor configured to select an access point to connect to among available access points, authenticate, using the authentication information, the device to the access point, connect to a further network provided by the access point, obtain from a server, via the interface, information about the local network, and use the information to connect to the local network.

Various embodiments of the second aspect include:
- That the hardware processor is configured to select the access point to connect to based on patterns in network identifiers of the access points.
- That the hardware processor is configured to select the access point to connect to based on information in beacons broadcast by the access points.
- That the hardware processor can be further configured to select the access point to connect to by selecting the access point with the strongest signal, using location information to determine the access point that is closest, connecting to different access points until an access point whose IP address matches an IP address stored in the memory is found, or selecting the access point whose service set identifier matches a service set identifier stored in the memory.

In a third aspect, the present principles are directed to a method for providing a device with access to a local network. An access point of the local network receives, through an interface, authentication information from the device, and authenticates, by a hardware processor, the device using the authentication information. In case the authentication is successful, the hardware processor provides the device with access to a network isolated from the local network and access to an external network. The access point receives from the device, through the interface, a secret shared by devices authorized to access the local network and provides the device with access to the local network.

In an embodiment of the third aspect, the access to the external network is limited Internet access.

In a fourth aspect, the present principles are directed to a method for connecting to a local network. In a device, a hardware processor selects an access point to connect to among available access points and authenticates, using stored authentication information, the device to the access point. The device then connects, through an interface, to a further network provided by the access point, the hardware processor obtains from a server, via the interface, information about the local network and uses the information to connect to the local network.

In a fifth aspect, the present principles are directed to a computer program comprising program code instructions executable by a processor for implementing the steps of a method according to any embodiment of the third aspect.

In a sixth aspect, the present principles are directed to a computer program product which is stored on a non-transitory computer readable medium and comprises program code instructions executable by a processor for implementing the steps of a method according to any embodiment of the third aspect.

In a seventh aspect, the present principles are directed to a computer program comprising program code instructions executable by a processor for implementing the steps of a method according to the fourth aspect.

In a eighth aspect, the present principles are directed to a computer program product which is stored on a non-transitory computer readable medium and comprises program code instructions executable by a processor for implementing the steps of a method according to the fourth aspect.

### BRIEF DESCRIPTION OF DRAWINGS

Preferred features of the present principles will now be described, by way of non-limiting example, with reference to the accompanying drawings, in which:
Figure 1 illustrates an exemplary system implementing the present principles;
Figure 2 illustrates an exemplary method for device insertion according to a preferred embodiment of the present principles;
Figure 3 illustrates a method for providing a device with access to a local network according to an embodiment of the present principles; and
Figure 4 illustrates a method for connecting to a local network according to an embodiment of the present principles.

### DESCRIPTION OF EMBODIMENTS

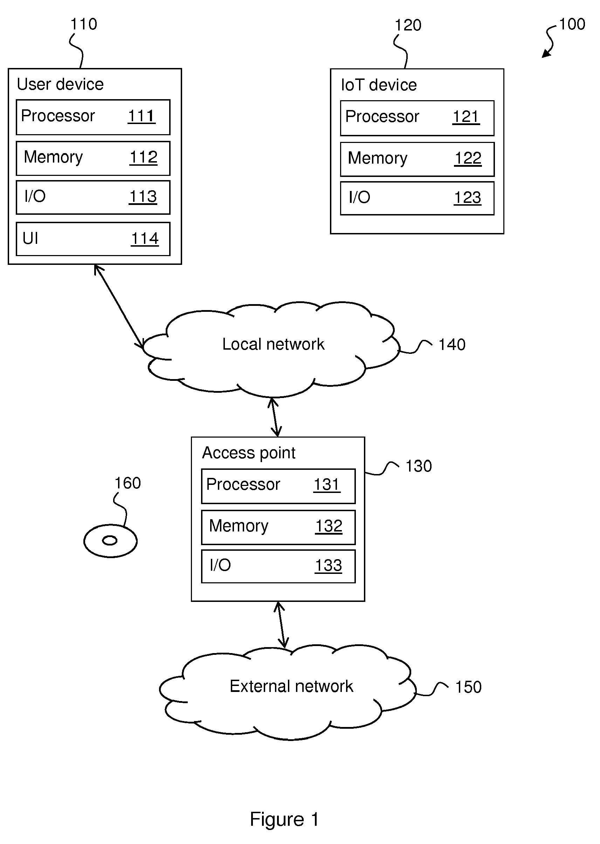

Figure 1 illustrates an exemplary system 100 implementing the present principles. The system 100 comprises a user device 110, an loT device 120, an access point 130 such as a gateway. The access point 130 is configured to interface a local network 140 and an external network 150, such as the Internet, through which connections can be made to devices in other network (not shown). The local network 140 is preferably a wireless network and at least the loT device 120 is a wireless device.

Each device 110, 120, 130 comprises at least one hardware processing unit ("processor") 111, 121, 131, memory 112, 122, 132 and at least one communications interface 113, 123, 133, preferably a WiFi interface, configured to communicate with other devices. The skilled person will appreciate that the illustrated devices are very simplified for reasons of clarity and that real devices in addition would comprise features such as internal connections and power supplies. Non-transitory storage media 160 stores instructions that, when executed by a processor, perform the functions of the access device 130 as further described hereinafter.

The user device 110, possibly connected to the local network 140, further comprises a user interface 114 and can for example be a laptop, a smartphone or a tablet.

The loT device 120 can be without user interface, such as in the case of a temperature sensor, can have a very limited user interface unsuitable for network configuration, such as the Amazon Dash button, but it can also comprise a full user interface with a keyboard and display.

The access point 130 is configured to perform conventional access point functions such as interfacing the local network 140 and the external network 150. A plurality of devices, loT devices and other devices, may be connected to or through the local network 140, or one local network as the gateway may offer a plurality of local networks, for instance in the form of isolated subnets such as for example 192.168.1.x, 192.168.2.x, etc. Typically, any device that proves knowledge of a shared network secret, such as a network key, is given access to the local network 140.

The external network 150 can be used to connect to servers and other loT devices, possibly through other access points (not shown).

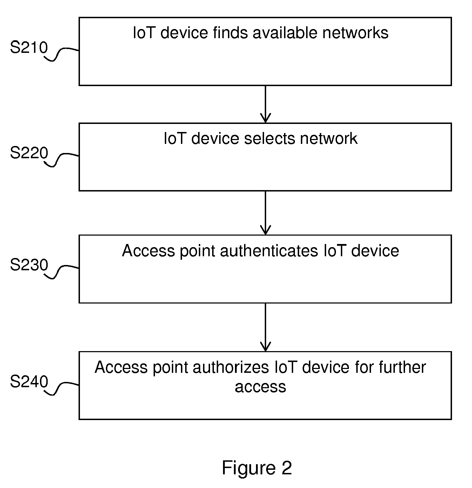

Figure 2 illustrates an exemplary method for device insertion according to a preferred embodiment of the present principles.

In step S210, the loT finds available access points. This can be done in the conventional way of finding available access points for the technology used, for example Wi-Fi.

In step S220, the loT device selects an access point among the available access points.

Whenever an loT device only needs Internet connectivity (i.e., when no access to the home network is needed), then it may connect to any access point that accepts a connection; it is not necessary to use the access point belonging to the user.

However, in other cases, the loT device needs to select the correct access point, i.e., the right service set identifier (SSID), without user intervention. First of all, the loT device must find available networks (and it is noted that these techniques may also be used to enable an loT device to find an access point that accepts a connection to the Internet, as just mentioned). To this end, the access point can for example:
(i) have a pattern in its SSID (e.g., TechnicolorlOT_xxxxxx). However, even so, the loT device may detect several such networks - e.g., TechnicolorlOT a1 d4cc and TechnicolorlOT_d7ff5e - from one or several access points . It should be noted that this is sufficient to select the right network in case the user provided the information when ordering the loT device.
(ii) broadcast specific information in its beacon to announce that the network is loT-enabled. In this case too, there may be several such networks.

If all that is needed is a compliant access point, the loT device may choose any one of the access points that allow Internet access, not necessarily the one belonging to the user. However, in other cases, the loT device may have to choose a specific network. To choose among the available networks (and, thus, access points), different techniques may be used:
(i) the loT device can choose the network with the most powerful signal (as it is likely to be the closest).
(ii) the loT device can use location information to determine the closest network. Note that this may fail in indoor environments.
(iii) the loT device can try all networks and connect to the network whose public IP-address matches a known IP-address, for example provided by the user when the loT device was ordered.
(iv) a HTTP accessible Application Programming Interface (API) may be provided on the access point 130 that can be used to obtain the access point SSID. Then, applications - e.g., for configuration and for ordering - on the user device 110 can make a HTTP request to "http://gateway.local/SSID" to obtain an SSID from the access point. This can be done totally transparently for the user and if appropriate Cross-Origin Resource Sharing (CORS) policies are applied, then the application is able to send this information to a server on the cloud, so that the configuration of the loT device 120 can be configured with this SSID. Indeed, even if connected to another access point than that of the user, the loT device will get access to the Internet allowing it to download information about the local network of the user (i.e., new configuration instructions); this may also be used to set up the loT device: it connects to any compliant access point to have access to the Internet from where it obtains the SSID of the user's network.

In step S230, the selected access point 130 authenticates the loT device 120. To this end, the loT device 120 comprises authentication information such as a secret (other than the shared network secret mentioned before) or a client-side certificate provided during manufacture. The processor 121 is configured to use a secure protocol such as EAP-TLS (Extensible Authentication Protocol - Transport Layer Security) to connect to the selected access point 130 over a Wi-Fi connection or similar.

Similarly, the access point 130 is configured to communicate with the loT device 120, in particular to receive the authentication information and to authenticate the loT device 120 based on the authentication information. A preferred authentication way is for the access point 130 to store a number of approved values and determine that the loT device is successfully authenticated if its authentication information matches one of the approved values. For example, in the case the authentication information is a client certificate, the approved values are certificate authentication keys (e.g., public keys corresponding to private keys used for signature of certificates). Another possibility is to authenticate the client certificate through the use of a so-called chain trust, as is well known in the art, leading to a trusted root certificate. In case the loT device 120 is successfully authenticated, it is granted access to the local network 140.

It will be appreciated that the present principles relies on an authority (e.g., Technicolor) to provide the certificates, This authority can for example be the manufacturer of the access point or an authority independent from the manufacturers of the access point and the loT device, such as an Internet Service Provider (ISP). It will however be appreciated that already deployed loT devices may have a certificate that may not be changed remotely. To enable already deployed access points to be compliant with such loT devices, the authentication server may be provided by the loT manufacturer with information enabling verification of the client certificate.

The authentication in the local network is as mentioned preferably based on password-less EAP-TLS with client and server-side certificate. EAP involves three parties: a client (a.k.a. the supplicant; i.e., the loT device 120), an authenticator (i.e., the access point 130), and an authentication server such as a RADIUS server.

According to the present principles, the RADIUS server may run on the access point 130, or alternatively in the cloud in line with Network Function Virtualization (NFV). The former embodiment makes the principles independent on third party servers in the cloud, while the latter embodiment reduces the complexity of the access point - it is easier to manage certificates and authorization on a few servers in the cloud rather than on perhaps millions of access points.

In EAP-TLS, once the loT device has been authenticated, the RADIUS server can return a Virtual LAN (VLAN) for use with the authenticated loT device. This makes it possible to configure a plurality of default VLANs on the access point. For example, VLAN 0 can be used to connect to the Internet, VLAN 1 to the Internet and to the local network, VLAN 2 only to *.technicolor.com, and so on. Thus, after successful authentication, the RADIUS server transmits to the authenticator the VLAN corresponding to the authorization for the authenticated device.

Alternatively, the EAP protocol can be extended with a dynamic Access Control List (ACL) assignment in which the authentication server returns an ACL indicating the resources to which a given device is authorized to connect. This embodiment is more flexible since it avoids configuration of static VLANs beforehand (which would limit to 4096 partners if each partner uses a separate VLAN, since there are at most 4096 VLANs and this could come with an overhead) but requires a slight modification of the authenticator and the authentication server.

In addition, the EAP protocol can be extended to have the client send additional authorization information such as a token for accessing the local network.

As already mentioned, it will be understood that it is possible that the loT device 120 and the access point 130 belong to different users. As will be seen below, this may not be a problem.

However, automatic connection to the local network 140 poses security issues. For example, certain devices - for example printers, Chromecast dongles and some Network-attached storage (NAS) device - assume that all other connected devices in the network are trusted. Therefore, such devices come without authentication or have the authentication disabled by default to allow easier setup. For this reason, it is preferred that loT devices are not automatically connected to the local network 140 without the (direct or indirect) consent of an owner of the local network, since automatic connection may expose private or sensitive data stored in the network.

Hence, according to the present principles it is preferred that the loT device 120 is connected to the access point 130 through an isolated local network that is separated from other local networks managed by the access point 130. As such, the loT device cannot communicate with devices in these other local networks unless explicitly authorized to do so. Network isolation can thus avoid interferences and security issues.

The isolation and ACL can be implemented using any conventional filtering technologies such as OpenFlow, iptables and packet filter. Whenever a new loT device is connected, the ACL is updated to reflect its authorization. It is noted that the authorization is granted to a specific device on a specific access point. If the loT device connects to another access point, it only obtains default authorization, not authorization granted by a user. For example, if an loT device is authorized to communicate with the local network of user A, it does not mean that it is authorized to communicate with the local network of user B. More specifically, if the RADIUS server is shared among access points (i.e., in the cloud/NFV), then the RADIUS server stores a list of authorization per device per access point, rather than just authorization per device.

However, many loT devices require only a connection to the Internet as they use the "cloud" as an intermediary for transferring data to other devices even if connected to the same physical network. Indeed, the cloud can assist in the authentication to make the Internet of Things more secure. For example, access may be limited to one or more specified domains such as "technicolor.com" or one or more specified Web sites. Hence, in one embodiment, the loT device 120 is allowed access to the external network 150 through the isolated local network. The access point 130 can store a list of access rights for each type of certificate and be configured to limit the access to the external network 150 depending on the access rights.

On the other hand, some loT devices - printers or devices using AirPlay or Chromecast - require the ability to communicate with other devices in the local network as they transfer large amount of content directly between devices or rely on protocols such as UPnP or Bonjour. Such devices should hence be allowed to connect to the (non-isolated) local network. In order to remain secure, in step S240, the access point 130 authorizes (or not) the loT device to provide further access. The access point 130 can use an authorization process such as for example:
- Automatic authorization to communicate with other devices in the local network based on a white-list based on the certificate to ensure that the white-listing mechanism cannot be abused. For example, all Chromecast devices (identified via the certificate) automatically get connected to the home network. It will be understood that this is an extension of the solution for limiting the access to the external network already described.
- The access point 130 may send to the user a request for additional access. This may for example be done when the loT device connects, when it calls an API on the access point 130 or on a device in the cloud, or when the loT device initiates a protocol such as Bonjour or Universal Plug and Play (UPNP). The user receives the request via a user interface of the user device 110 (previously defined in the access point 130) and responds ('approved' or 'disapproved', or a combination thereof in case more than one access was requested) preferably through the same user interface, but it will be understood that the response may be given through another interface. The response is thus returned to the access point 130 that implements the response.

The requested rights could for example be access to the home network or unrestricted access to the Internet (i.e., "*" rather than just "*.technicolor.com"). The access could be given for a limited time, for example provided by the user or predetermined by the access point.

In one embodiment, the user is asked for the authorization when the loT device 120 is ordered. This can for example cause the manufacturer to indicate the access in the certificate of the loT device.
- The user may manually alter the access rights at the access point 130. A disadvantage is that it requires the user to know that this should be done. However, even if automatic authorization is used, it can be useful to allow the user to alter a previous authorization decision.
- The access point 130 can provide tokens that allow loT devices to request access to the home network, which preferably is granted without user intervention. To this end, the access point 130 exposes a specific web service. During the ordering procedure of the loT device, the ordering website or application requests the user for a token from the access point 130 (similarly to SSO systems that can provide authentication token). The user thus preapproves the loT device for access to its home network when it is ordered and the loT device is either preconfigured with the token or is configured to download the information about the local network (i.e., the configuration) from the cloud during its first connection.

The token can be sent to the authentication server in the access point or in the cloud through an EAP extension (inside the EAP-TLS encrypted channel). This latter is the most secure option as the authentication server in the cloud can be protected and trusted and the token thus cannot be stolen.

The token can alternatively be sent to the access point over a SSL connection such as HTTPS, but if an access point is hacked, the token can be stolen.

The token can alternatively be sent to the access point using a challenge-response response protocol, which can prevent the token from being stolen, but a replay-attack on the challenge can remain possible.

The token can also be sent to the access point in clear, which clearly is the least secure option.

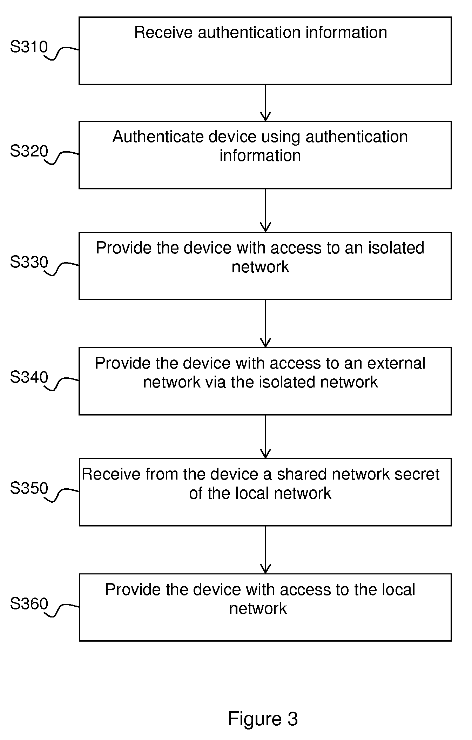

Figure 3 illustrates a method for providing a device with access to a local network according to an embodiment of the present principles. An access point (130) of the local network (140) receives (S310), through an interface (133), authentication information from the device (120) and authenticates (S320), by a hardware processor (131), the device using the authentication information. In case the authentication is successful, the hardware processor (131) provides (S330) the device with access to a network isolated from the local network (140) and provides (S340) the device with access to an external network (150) via the isolated network. The access point (130) then receives (S350) from the device (120) through the interface (133), a shared network secret of the local network (140) and the hardware processor (131) provides (S360) the device (120) with access to the local network (140).

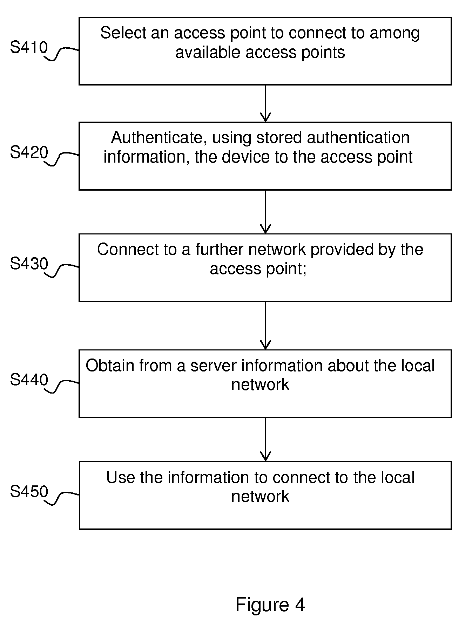

Figure 4 illustrates a method for connecting to a local network according to an embodiment of the present principles. A hardware processor (121) of a device (120) selects (S410) an access point to connect to among available access points, authenticates (S420), using stored authentication information, the device to the access point and connects (S430), through an interface (123), to a further network provided by the access point. The hardware processor (121) obtains (S440) from a server, via the interface, the further network and the access point, information about the local network (140) and uses (S450) the information to connect to the local network (140).

The information about the local network may comprise:
- Access point identification information,
- The SSID of the local network,
- The SSID of a further network isolated from the local network, and
- Authentication means such as access tokens, keys or certificates.

Thus, the present principles is fully transparent for the user in many cases. The user is solicited only when input regarding a particular access request is needed. By isolating loT devices and limiting the resources they can accesses, the present principles can, in the long run, help prevent attacks using outdated loT devices.

It will thus be appreciated that the present principles provide a solution for connection of, in particular loT, devices to access points. Depending on the embodiment, the solution can:
- Connect an loT device to an external network via an access point without intervention from a user.
- Allow an access point to provide an isolated local network for the loT device.
- Require user intervention only in special cases.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

## Claims

1. An access point (130) comprising:
an interface (133) configured for wireless communication with devices; and
a hardware processor (131) configured to:
- provide access to a local network (140) to devices proving knowledge of a shared network secret;
- authenticate a device using authentication information different from the shared network secret received from the device; and
- provide an authenticated device with access to a network isolated from the local network (140).

2. The access point of claim 1, wherein the hardware processor (131) is configured to provide limited Internet access to the authenticated device through the network for the authenticated device.

3. The access point of claim 1, wherein the hardware processor (131) is configured to perform authorization of the authenticated device in order to provide access to the local network (140).

4. A device (120) for connecting to a local network, the device comprising:
- memory (122) configured to store authentication information;
- an interface (123) configured for wireless communication with access points; and
- a hardware processor (121) configured to:
select an access point to connect to among available access points;
authenticate, using the authentication information, the device to the access point;
connect to a further network provided by the access point;
obtain from a server, via the interface, information about the local network; and
use the information to connect to the local network.

5. The device of claim 4, wherein the hardware processor (121) is configured to select the access point to connect to based on patterns in network identifiers of the access points.

6. The device of claim 4, wherein the hardware processor (121) is configured to select the access point to connect to based on information in beacons broadcast by the access points.

7. The device of claim 5 or 6, wherein the hardware processor (121) is further configured to select the access point to connect to by selecting the access point with the strongest signal, using location information to determine the access point that is closest, connecting to different access points until an access point whose IP address matches an IP address stored in the memory (122) is found, or selecting the access point whose service set identifier matches a service set identifier stored in the memory (122).

8. A method for providing a device with access to a local network (140), the method comprising at an access point (130) of the local network (140):
- receiving (S310), through an interface (133), authentication information from the device (120);
- authenticating (S320), by a hardware processor (131), the device using the authentication information;
- in case the authentication is successful, providing (S330), by the hardware processor (131), the device with access to a network isolated from the local network;
- providing (S340), by the hardware processor (131), the device with access to an external network (150);
- receiving (S350) from the device (120), through the interface (133), a secret shared by devices authorized to access the local network (140); and
- providing (S360), by the hardware processor (131), the device (120) with access to the local network (140).

9. The method of claim 8, wherein the access to the external network is limited Internet access.

10. A method for connecting to a local network (140), the method comprising at a device (120):
selecting (S410), by a hardware processor (121), an access point to connect to among available access points;
authenticating (S420), by the hardware processor (121) using stored authentication information, the device to the access point;
connecting (S430), through an interface (123), to a further network provided by the access point;
obtaining (S440), by the hardware processor (121), from a server, via the interface, information about the local network (140); and
using (S450) the information to connect to the local network (140).

11. Computer program comprising program code instructions executable by a processor for implementing the steps of a method according to at least one of claims 8 and 9.

12. Computer program product which is stored on a non-transitory computer readable medium and comprises program code instructions executable by a processor for implementing the steps of a method according to at least one of claims 8 and 9.

13. Computer program comprising program code instructions executable by a processor for implementing the steps of a method according to claim 10.

14. Computer program product which is stored on a non-transitory computer readable medium and comprises program code instructions executable by a processor for implementing the steps of a method according to claim 10.
